# EUROPÄISCHE PATENTSCHRIFT

(11) **EP 0 690 239 B1**
(45) Veröffentlichungstag und Bekanntmachung des Hinweises auf die Patenterteilung: **23.07.1997**
(21) Anmeldenummer: 95109193.3
(22) Anmeldetag: 14.06.1995
(51) Int. Cl.: F16B 13/08

(54) **Befestigungselement**
Fastening element
Elément de fixation

(30) Priorität: 02.07.1994 DE 4423234
(43) Veröffentlichungstag der Anmeldung: 03.01.1996
(73) Patentinhaber: fischerwerke Artur Fischer GmbH & Co. KG, D-72178 Waldachtal (DE)
(72) Erfinder: Fischer, Artur, Prof. Dr. h.c. Dr.-Ing. E.h., D-72178 Waldachtal (DE); Luger, Uwe, D-72178 Waldachtal (DE)

(56) Entgegenhaltungen:
- DE-A- 2 316 163
- DE-A- 4 312 340

## Beschreibung

Die Erfindung betrifft ein Befestigungselement, das in einem Bohrloch in einem Bauelement aus Metall, insbesondere aus Stahl, befestigbar und an dem ein Gegenstand anbringbar ist mit den Merkmalen des Oberbegriffs des Anspruchs 1.

Aus der DE 29 14 739 A1 ist ein Befestigungselement zum Befestigen in einem Bohrloch in Beton und dgl. bekannt. Das bekannte Befestigungselement umfaßt einen Bolzen mit einer Längsnut in seinem vorderen, im Bohrloch befindlichen Bereich, deren Nutgrund in Richtung zu einem vorderen Stirnende des Bolzens ansteigt und in der ein Keil in Längsrichtung des Bolzens verschiebbar einliegt. Zum Befestigen des Befestigungselements im Bohrloch und zum Anbringen eines Gegenstands an dem Befestigungselement weist der Bolzen an seinem aus dem Bohrloch herausstehenden Ende ein Außengewinde auf, mittels dessen er durch Aufschrauben einer Mutter mit einer Kraft in Richtung aus dem Bohrloch heraus beaufschlagbar ist. Dabei gleitet der Keil auf dem ansteigenden Nutgrund in Bezug auf den Bolzen nach vorn und wird radial nach außen gegen die Bohrlochwandung gedrückt, wodurch zugleich der Bolzen in entgegengesetzter Richtung an die Bohrlochwandung angedrückt wird. Das Befestigungselement ist dadurch im Bohrloch festgeklemmt. Zur besseren Verklemmbarkeit weist der Keil eine Verzahnung an seiner der Bohrlochwandung zugewandten Seite auf.

Die Zahnköpfe der Verzahnung des Keils des bekannten Befestigungselements sind gerade. Sie stoßen dadurch beim Einführen des bekannten Befestigungselements in ein in Metall angebrachtes Bohrloch an dessen zylinderförmigen Bohrlochwandung an, wodurch sowohl die seitlichen Ecken an den Zahnköpfen der Zähne als auch die Bohrlochwandung beschädigt werden. Desweiteren liegen die Zähne beim Verspannen des bekannten Befestigungselements nur in den Eckbereichen an der Bohrlochwandung an, so daß das Befestigungselement lediglich geringe Haltekräfe zu übertragen vermag. Darüber hinaus sind die Zähne des Keils des bekannten Befestigungselements kaum verformbar, so daß ein Eintreiben des Befestigungselementes in ein Bohrloch eines Metalls nicht bzw. nur mit sehr hohem Kraftaufwand möglich wäre.

Es ist daher Aufgabe der Erfindung, ein Befestigungselement zu schaffen, daß in einem Bohrloch in einem Bauteil aus Metall befestigbar ist und dauerhaft eine hohe Haltekraft gewährleistet.

Diese Aufgabe wird gelöst durch die Merkmale des Anspruchs 1. Die Zahnköpfe der Zähne des Keils des erfindungsgemäßen Befestigungselements sind quer zum Bolzen gewölbt und dadurch der Rundung der Bohrlochwandung angepaßt. Die Zähne liegen linienförmig mit ihren Zahnköpfen an der Bohrlochwandung an. Weiterhin sind die einzelnen Zähne mit Abstand voneinander angeordnet, so daß an ihren Zahnfüßen ein Zwischenraum entsteht. Die Zähne sind dadurch elastisch und plastisch verformbar, sie biegen sich beim Einschlagen des erfindungsgemäßen Befestigungelements zurück. Beim Verspannen des erfindungsgemäßen Befestigungselements werden die Zähne radial nach außen gegen die Bohrlochwandung gedrückt und gewährleisten durch ihre Elastizität einen guten Reibschluß und dadurch eine hohe Haltekraft des Befestigungselements im Bohrloch. Um eine möglichst große Stabilität des flachen Keils zu erreichen, sind die Oberflächen des Keils zwischen den Zahnfüßen ebenfalls in Querrichtung gewölbt. Dies ergibt eine relativ große Querschnittsfläche des Keils in den Zahnzwischenräumen. Weiterhin führen die gewölbten Keiloberflächen zwischen den Zahnfüßen zu einer gleichen Verformung der Zähne über ihre gesamte Breite und damit zu einer gleichmäßigen elastischen Verspannung, da der Zahnquerschnitt über die Zahnbreite konstant ist. Dies erhöht die Haltekraft des erfindungsgemäßen Befestigungselements im Bohrloch.

Das erfindungsgemäße Befestigungselement hat den Vorteil, daß nur ein kurzes Bohrloch zur Befestigung notwendig ist. Im Vergleich zu einer Schraubverbindung mit einem in das Bauteil geschnittenen Gewinde läßt sich das erfindungsgemäße Befestigungselement wesentlich schneller und einfacher montieren.

Der Keil gleitet in Längsrichtung auf einer Gleitschicht auf dem Nutgrund. Zu diesem Zweck kann ein Kunststoffplättchen, vorzugsweise aus Teflon, in die Nut unter dem Keil eingelegt sein. Die Gleitschicht gewährleistet dauerhaft eine leichte Verschiebbarkeit des Keils auch unter Extrembedingungen.

Die Zahnköpfe stehen in radialer Richtung etwas über den Außenumfang des Bolzens vor, wenn der Keil in der Nut bis zum Nutende zurückgeschoben ist. Dadurch liegen die Zahnköpfe beim Einschlagen des erfindungsgemäßen Befestigungselements an der Bohrlochwandung an und bewirken einen Reibschluß zwischen dem Keil und der Bohrlochwandung, wodurch sich der Keil beim Festspannen des Befestigungselements relativ zum Bolzen verschiebt und sich dabei in radialer Richtung vom Bolzen nach außen bewegt und die Verklemmung des Befestigungselements im Bohrloch bewirkt.

Bei einer bevorzugten Ausgestaltung der Erfindung sind die beispielsweise zwei oder drei Zähne am rückwärtigen Ende des Keils höher als die übrigen Zähne. Die Zähne stehen in radialer Richtung weiter vom Bolzen nach außen und führen dadurch zu einer zusätzlichen Verklemmung des Keils. Die niedrigeren Zähne im vorderen Bereich des Keils ermöglichen ein leichteres Einführen des erfindungsgemäßen Befestigungselements in das Bohrloch.

Die in Einschlagrichtung vordere Flanke des vordersten Zahns des Keils ist zugleich die vordere Stirnfläche des Keils, wodurch sich ein kurzer Keil und ein gut zum Einschlagen am Bohrloch ansetzbares Befestigungselement ergibt.

Die hintere Stirnfläche der Nut steht in etwa senkrecht zur Längsrichtung des Bolzens und bildet einen Anschlag für den Keil in seiner zurückgeschobenen Stellung beim Einschlagen des erfindungsgemäßen Befestigungselements.

An ihrer Vorderseite läuft die Nut offen zur Stirnseite des Bolzens hin aus, wodurch sich ein relativ kurzer Bolzen fertigen läßt, wobei die Längsverschiebbarkeit des Keils nach vorne in Bezug auf den Bolzen nicht begrenzt ist.

Um den Keil vor dem Einschlagen in das Bohrloch in der Nut zu halten, ist er mittels eines ringförmigen, beispielsweise gummielastischen Halteelements in der Nut gehalten.

Im folgenden wir die Erfindung anhand eines in der Zeichnung dargestellten Ausführungsbeispiels näher erläutert.

Es zeigen:
- Figur 1: ein erfindungsgemäßes Befestigungselement in Seitenansicht; und
- Figur 2: das erfindungsgemäße Befestigungselement aus Figur 1 in Stirnansicht von seiner in ein Bohrloch einzuschlagenden Seite.

Das in der Zeichnung dargestellte, insgesamt mit 10 bezeichnete erfindungsgemäße Befestigungselement ist zum Festklemmen in einem Bohrloch in einem Bauteil aus Metall, insbesondere aus Stahl, vorgesehen. Es weist einen Bolzen 12 auf, der an seinem rückwärtigen, aus dem nicht dargestellten Bohrloch herausstehenden Ende mit einem Außengewinde 14 versehen ist. Am gewindeseitigen Stirnende hat der Bolzen 12 einen kurzen Abschnitt 16 kleineren Durchmessers, der zum Einschlagen des Befestigungselements 10 dient und dabei das Außengewinde 14 vor Beschädigung schützt.

An seinem in das Bohrloch einzuschlagenden vorderen Ende weist der Bolzen 12 eine Fase 18 zum Ansetzen des Bolzens 12 beim Einschlagen in das Bohrloch auf.

An seinem vorderen Ende ist der Bolzen 12 mit einer Längsnut 20 versehen. Der Nutgrund 22 dieser Nut 20 steigt in Richtung des vorderen Endes des Bolzens 12 an. Die Nut 20 läuft an der vorderen Stirnseite des Bolzens 12 offen aus. Ihr rückwärtiges Ende ist von einer senkrecht zur Längsrichtung des Bolzens 12 stehenden Nutwand 24 begrenzt. Auf dem Nutgrund 22 befindet sich ein in die Nut 20 eingelegtes Kunstoffplättchen 26.

In die Nut 20 ist ein Keil 28 eingelegt, der zwischen Nutflanken 30 in Längsrichtung des Bolzens 12 verschiebbar geführt ist. Die rückwärtige Nutwand 24 bildet einen Anschlag für den Keil 28, der dessen Rückwärtsbewegung relativ zum Bolzen 12 begrenzt. Das Kunststoffplättchen 26 bildet eine Gleitschicht für den Keil 28.

An seiner dem Nutgrund 22 abgewandten Seite weist der Keil 28 quer zum Bolzen 12 angeordnete Zähne 32 auf. Die Zahnköpfe 34 der Zähne 32 sind gewölbt, ihr Wölbungsradius ist in etwa gleich wie der Radius des Bolzens 12. Die Zähne 32 sind mit Abstand voneinander angeordnet. Die dem Nutgrund 22 abgewandten Oberflächen 36 des Keils 28 im Zwischenraum zwischen den Zahnfüßen sind ebenfalls gewölbt, so daß der Querschnitt der Zähne 32 über ihre Breite gleich bleibt.

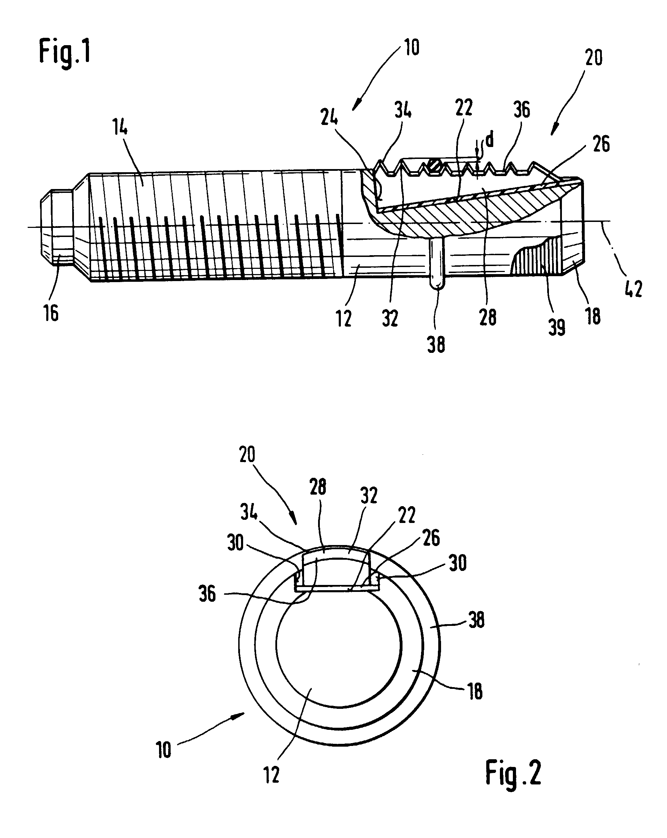

In radialer Richtung stehen die Zähne 32 über den Umfang des Bolzens 12 vor, wenn der Keil 28 bis zum Anschlag 24 zurückgeschoben ist, sich also in seiner am tiefsten abgesenkten Stellung in der Nut 20 befindet. Weiterhin sind die beiden rückwärtigen Zähne 32 höher als die übrigen Zähne 32, was in Figur 1 mit dem Maß d kenntlich gemacht ist.

Ein um den Bolzen 12 und den Keil 28 herumgelegter Gummiring 38 hält den Keil 28 in der Nut 20, solange das Befestigungselement 10 noch nicht in das Bohrloch eingeschlagen ist.

Zum Befestigen wird das erfindungsgemäße Befestigungselement 10 in ein Bohrloch eines Bauteils aus Metall, insbesondere aus Stahl, eingeschlagen. Dabei werden die Zähne 32 elastisch nach hinten verformt. Ein nicht dargestellter, an dem Bauteil anzubringender Gegenstand wird auf den aus dem Bohrloch herausstehenden Teil des Bolzen 12 aufgeschoben. Anschließend wird eine ebenfalls nicht dargestellte Mutter auf das Außengewinde 14 aufgeschraubt. Dabei wird der Bolzen 12 ein kurzes Stück im Bohrloch zurückgezogen, wogegen der Keil 28, dessen Zähne 32 elastisch an der Bohrlochwandung anliegen, ortsfest im Bohrloch verbleibt. Durch diese Relativbewegung gleitet der Keil 28 auf dem Kunststoffplättchen 26 auf dem Nutgrund 22 auf. Aufgrund dieser Relativbewegung wird der Keil 28 in radialer Richtung vom Bolzen 12 nach außen gedrückt, wodurch die Zähne 32 fest an die Bohrlochwandung angedrückt und gleichzeitig der Bolzen 12 im gegenüberliegenden Bereich an die Bohrlochwandung angedrückt wird. Das erfindungsgemäße Befestigungselement 10 ist stabil im Bohrloch festgeklemmt. Zur Verbesserung ver Klemmung kann der Bolzen 12 mit einer rillenförmigen Aufrauhung 39 versehen sein.

## Patentansprüche

1. Befestigungselement zum Befestigen in Metall, insbesondere in Stahl, mit einem Bolzen, dessen hinteres Ende zum Anbringen eines Gegenstands ausgebildet ist, und der an seinem vorderen Ende mindestens eine Nut aufweist, deren Nutgrund in Richtung zur vorderen Stirnseite des Bolzens ansteigt, und mit einem in der Nut einliegenden, in Längsrichtung des Bolzens verschiebbaren Keil, der quer angeordnete Zähne an seiner bezüglich des Bolzens nach außen weisenden Seite aufweist, **dadurch gekennzeichnet**, daß die Zahnköpfe (34) in Querrichtung bezüglich des Bolzens (12) gewölbt sind, wobei der Wölbungsradius in etwa gleich wie der Radius des Bolzens (12) ist, daß die Zähne (32) am Zahnfuß einen Abstand voneinander aufweisen, und daß die Keiloberflächen (36) zwischen den Zahnfüßen in Querrichtung gewölbt sind.

2. Befestigungselment nach Anspruch 1, **dadurch gekennzeichnet**, daß sich zwischen dem Keil (28) und dem Nutgrund (22) eine Gleitschicht befindet.

3. Befestigungselemnt nach Anspruch 2, **dadurch gekennzeichnet**, daß die Gleitschicht durch ein Kunststoffplättchen (26), vorzugsweise aus Teflon, gebildet ist.

4. Befestigungselement nach Anspruch 1, **dadurch gekennzeichnet**, daß die Zahnköpfe (34) in vollständig zurückgeschobener Stellung des Keils (28) in radialer Richtung über den Außenumfang des Bolzens (12) vorstehen.

5. Befestigungselement nach Anspruch 1, **dadurch gekennzeichnet**, daß der radiale Überstand der Zahnköpfe (34) der am rückwärtigen Ende des Keils (28) angeordneten Zähne (32) größer als derjenige der übrigen Zähne (32) ist.

6. Befestigungselement nach Anspruch 1, **dadurch gekennzeichnet**, daß die vordere Zahnflanke des vordersten Zahns (32) zugleich die vordere abgeschrägte Stirnfläche des Keils (28) bildet.

7. Befestigungselement nach Anspruch 1, **dadurch gekennzeichnet**, daß eine hintere Nutwand (24) einen Anschlag für den Keil (28) bildet.

8. Befestigungselement nach Anspruch 1, **dadurch gekennzeichnet**, daß die Nut (20) an der vorderen Stirnseite des Bolzens (12) offen ausläuft.

9. Befestigungselement nach Anspruch 1, **dadurch gekennzeichnet**, daß der Keil (28) mittels eines ringförmigen Halteelements (38) in der Nut (20) gehalten ist.

10. Befestigungselement nach Anspruch 1, **dadurch gekennzeichne**t, daß die Mantelfläche des Bolzens (12) eine rillenförmige Aufrauhung (39) aufweist.

## Claims

1. Fastening element for fastening in metal, especially in steel, having a bolt the rear end of which is arranged for the mounting of an article and which has at least one groove in its forward end, the base of which groove rises towards the forward end face of the bolt, and having a wedge which is arranged in the groove so as to be displaceable in the longitudinal direction of the bolt and has transversely arranged teeth on its side facing outwards relative to the bolt, **characterized in that** the tips (34) of the teeth are convexly curved in a transverse direction relative to the bolt (12), the radius of curvature being approximately equal to the radius of the bolt (12), that at their base the teeth (32) are located at a distance from one another and that the surfaces (36) of the wedge between the bases of the teeth are convexly curved in a transverse direction.

2. Fastening element according to claim 1, **characterized in that** a sliding-contact layer is located between the wedge (28) and the base (22) of the groove.

3. Fastening element according to claim 2, **characterized in that** the sliding-contact layer is formed from a small plastics plate (26), preferably of Teflon.

4. Fastening element according to claim 1, **characterized in that** the tips (34) of the teeth project in a radial direction beyond the external circumference of the bolt (12) when the wedge (28) is in its fully pushed back position.

5. Fastening element according to claim 1, **characterized in that** the tips (34) of the teeth (32) located at the rear end of the wedge (28) project further radially than the other teeth (32).

6. Fastening element according to claim 1, **characterized in that** the forward flank of the foremost tooth (32) forms at the same time the chamfered forward end face of the wedge (28).

7. Fastening element according to claim 1, **characterized in that** a rear wall (24) of the groove forms a stop for the wedge (28).

8. Fastening element according to claim 1, **characterized in that** the groove (20) opens out into the forward end face of the bolt (12).

9. Fastening element according to claim 1, **characterized in that** the wedge (28) is held in the groove (20) by means of a ring-shaped holding element (38).

10. Fastening element according to claim 1, **characterized in that** the outer surface of the bolt (12) has a roughened texture (39) in the form of grooving.

## Revendications

1. Elément de fixation destiné à être fixé dans un métal, particulièrement dans de l'acier, cet élément comportant un boulon dont l'extrémité arrière est conformée pour la mise en place d'un objet, et qui présente à son extrémité avant au moins une gorge dont le fond est ascendant en direction du côté frontal avant du boulon et comportant un coin placé dans la gorge, susceptible d'être déplacé dans le sens longitudinal du boulon, coin qui présente des dents disposées transversalement sur son côté orienté vers l'extérieur par rapport au boulon, **caractérisé en ce que** les têtes (34) de dents sont bombées dans le sens transversal par rapport au boulon (12), le rayon de courbure étant approximativement égal au rayon du boulon (12), en ce que les dents (32) présentent à leurs pieds un intervalle entre elles et en ce que les surfaces extérieures (36) du coin sont bombées dans le sens transversal, entre les pieds des dents.

2. Elément de fixation selon la revendication 1, **caractérisé en ce qu**'une couche de glissement existe entre le coin (28) et le fond (22) de la gorge.

3. Elément de fixation selon la revendication 2, **caractérisé en ce que** la couche de glissement est une plaquette (26) en matière plastique, de préférence en "Téflon".

4. Elément de fixation selon la revendication 1, **caractérisé en ce que** les têtes (34) de dents font saillie dans le sens radial, au-delà de la périphérie du boulon (12), lorsque le coin (28) est dans sa position de recul complet.

5. Elément de fixation selon la revendication 1, **caractérisé en ce que** la saillie radiale des têtes (34) des dents (32) situées à l'extrémité arrière du coin (28) est plus grande que celle des autres dents (32).

6. Elément de fixation selon la revendication 1, **caractérisé en ce que** le flanc avant des dents (32) situées le plus en avant forme également la surface frontale avant biseautée du coin (28).

7. Elément de fixation selon la revendication 1, **caractérisé en ce qu**'une paroi arrière (24) de la gorge forme une butée pour le coin (28).

8. Elément de fixation selon la revendication 1, **caractérisé en ce que** la gorge (20) se termine par une ouverture sur le côté frontal avant du boulon (12).

9. Elément de fixation selon la revendication 1, **caractérisé en ce que** le coin (28) est maintenu dans la gorge (20) au moyen d'un élément annulaire de retenue (38).

10. Elément de fixation selon la revendication 1, **caractérisé en ce que** la surface extérieure du boulon (12) est dotée d'une rugosité (39) formant des stries.
